# EUROPÄISCHE PATENTSCHRIFT

(11) **EP 0 714 624 B1**
(45) Veröffentlichungstag und Bekanntmachung des Hinweises auf die Patenterteilung: **15.01.1997**
(21) Anmeldenummer: 94118337.8
(22) Anmeldetag: 22.11.1994
(51) Int. Cl.: A47J 45/07

(54) **Griffbefestigung**
Grip fixation
Fixation de poignée

(43) Veröffentlichungstag der Anmeldung: 05.06.1996
(73) Patentinhaber: HEINRICH BAUMGARTEN KG SPEZIALFABRIK FÜR BESCHLAGTEILE, 57290 Neunkirchen (DE)
(72) Erfinder: Baumgarten, Gerd-Diethard, Dipl.-Ing., D-57234 Wilnsdorf-Wilden (DE)
(74) Vertreter: Missling, Arne, Dipl.-Ing.

(56) Entgegenhaltungen:
- DE-A- 2 501 404
- DE-B- 2 264 244
- DE-U- 9 315 144
- DE-U- 9 405 597
- US-A- 3 648 887

## Beschreibung

Die Erfindung betrifft eine Griffbefestigung nach dem Oberbegriff des Anspruches 1.

Eine solche Griffbefestigung ist aus der Offenlegungsschrift DE 22 64 244 A1 bereits bekannt; sie ist geeignet, das Griffstück unter Vorspannung an das Kochgefäß zu pressen und so jegliches Spiel zwischen den Bauelementen der Griffbefestigung auszuschalten, so daß die Griffbefestigung relativ leicht herstellbar, andererseits aber schwer lösbar ist und damit eine sichere Verbindung zwischen dem Griffstück und dem Haltestück gewährleistet wird.

In vielen Fällen ist es aber stattdessen erwünscht, das Griffstück nach Belieben von dem Haltestück leicht entfernen und wieder befestigen zu können. So ist es beispielsweise praktisch, wenn Griffstücke von dem zugehörigen Kochgefäß entfernt werden können, wenn dieses in einem beheizten Ofenraum verwendet werden soll, weil dann das Kochgefäß mit den wieder auf den Haltestücken aufgebrachten, aber nicht mit beheizten Griffstücken aus dem Ofenraum ohne weitere Hilfsmittel entnommen werden kann.

Leicht lösbare Griffbefestigungen sind bereits seit langem bekannt.

So ist in der Auslegeschrift DE 1 256 850 ein abnehmbarer Handgriff beschrieben worden, bei dem ein unbewegliches mit einem beweglichen, verdrehbaren Griffteil kombiniert ist; bei der Drehbewegung wird eine Klemmvorrichtung gespannt oder gelöst, mit deren Hilfe der Handgriff an dem zugehörigen Kochgefäß befestigt ist. Eine solche Griffbefestigung ist umständlich, denn sie erfordert beide Hände während der Befestigung oder Ablösung des Handgriffes; sie ist aber auch kompliziert aufgebaut, und das erzeugbare Drehmoment bleibt niedrig, so daß die Befestigung nicht sicher ist.

Eine etwas einfachere Konstruktion ist in der Offenlegungsschrift DE 1 429 912 vorgesehen. Dabei ist ein lösbarer Griff mit einem Gleitstück versehen, das in ein komplementäres, an dem Kochgefäß befestigtes Gegenstück einschiebbar und verriegelbar ist. Hierbei genügt eine Hand zur Bedienung der Griffbefestigung sowohl beim Lösen als auch beim Arretieren des Griffes; eine unter Vorspannung sichere und spielfreie Verriegelung ist aber nicht möglich. Die Anbringung des Griffes beispielsweise in einem beheizten Ofen ist kompliziert, weil das Gleitstück in das Gegenstück eingefädelt werden muß.

In der Offenlegungsschrift DE 1 934 241 ist ein Handgriff mittels einer Rastung an einem Haltestück befestigbar, das sich ortsfest an einem Kochgefäß befindet und mindestens einen Biegeschenkel aufweist, der unter einer an dem Handgriff aufgebrachten Biegekraft aufbiegbar ist, wobei die Rastung gelöst wird. In gleicher Weise ist eine Biegekraft erforderlich, wenn der separierte Handgriff wieder verrastet werden soll. Je sicherer die Rastung sein soll, umso größer muß die erforderliche Biegekraft gewählt werden, so daß die Anbindung des Handgriffes beispielsweise in einem beheizten Ofen nicht zügig genug erfolgen kann und wegen der erforderlichen Biegekraft und der umständlichen Einhängung des Handgriffes unvorteilhaft ist,

Eine weitere lösbare Griffbefestigung ist in der Patentschrift CH 548 190 vorgesehen. Der zugehörige Handgriff ist an einem an dem Kochgefäß ausgebildeten Flanschrand dadurch befestigbar, daß ein an diesem befindliches Loch von einem Riegelorgan des Handgriffes durchsetzt wird und das Riegelorgan reibschlüssig arretierbar ist. Diese einfache Anordnung erfordert für eine einigermaßen sichere Verriegelung eine erhebliche Bedienkraft, die beispielsweise von einer Hausfrau nicht aufgebracht werden kann.

Die US-A-3 648 887 zeigt eine Griffbefestigung, bei der das am Topf befestigte Halteteil eine ovale Aufnahmeöffnung aufweist, in die der Griff eingesteck wird. Zur Festlegung des Griffes dient eine Feder, die in eine Ausnehmung des Griffes gehaltert ist und mit einem in die ovale Öffnung ragenden Tragsteg zusammenwirkt. Zur Lösung des Griffes ist das Ende der Feder in Form eines Betätigungsknopfes ausgebildet, der über die Griffkanten ragt.

Die Erfindung hat sich deshalb die Aufgabe gestellt, eine Griffbefestigung der eingangs näher bezeichneten Art so auszubilden, daß sie mit wenig Kraft mit einer Hand leicht lösbar und wieder spielfrei verriegelbar ist und dabei aus einfach zusammensetzbaren Teilen besteht.

Diese Aufgabe wird mit den Merkmalen des Anspruches 1 gelöst.

Das Federstück besteht zweckmäßig aus einem Halteschenkel und einem Biegeschenkel und ist mit seinem Halteschenkel der Durchbrechung gegenüberliegend ortsfest gehaltert, wobei der Biegeschenkel als einarmiger Hebel ausgeführt ist mit einem ersten Rastelement, das beim Zusammenwirken mit einem an dem Haltestück ausgebildeten zweiten Rastelement die Verrastung herstellt. Weil das Betätigungsstück quer zu der Längserstreckung des Griffstückes bewegt wird und sich auch das Federstück in der Ausnehmung längs-erstreckt, genügt eine kleine Betätigungskraft an dem Betätigungsstück, um die Rastung zu lösen.

Auch das Wiederbefestigen des Griffstückes bietet keinerlei Schwierigkeiten und geht insbesondere dann unter geringem Kraftaufwand vonstatten, wenn sich an dem Biegeschenkel eine Ablaufschräge befindet, die beim Aufschieben des Griffstückes mit einer Querschulter des Haltestückes kontaktiert und dabei den Biegeschenkel gegen die dabei steigende Federkraft zunehmend aus seiner Ruhelage ausschwenkt, bis sein Rastelement unter dem Einfluß der Federkraft in das Rastelement an dem Haltestück einfällt. Die beteiligten Kräfte lassen sich durch die geometrische Ausbildung des Federstückes und der Rastelemente so gestalten, daß trotz geringen Kraftaufwandes eine spielfreie formschlüssige Verrastung erfolgt.

Es ist vorteilhaft, wenn mittels des Betätigungsstückes der Biegeschenkel an seinem freien Endstück belastbar ist. Auf diese Weise ist selbst ein häufiges Lösen des Griffstückes leicht ausführbar und erfordert nur einen geringen Kraftaufwand. Damit sind beide Arbeitsvorgänge außerordentlich anwenderfreundlich.

In einer besonders vorteilhaften Ausführung der erfindungsgemäßen Griffbefestigung weist die Ausnehmung des Griffstückes, die in ihrer Längserstreckung zumindest teilweise von der metallenen, rohrförmigen und in der Ausnehmung ortsfest arretierten Hülse ausgekleidet ist, einen im wesentlichen rechteckigen Querschnitt auf, wobei auch die Hülse diesem Querschnitt folgt. Eine relative Bewegung der Hülse auf dem metallenen Haltestück während des Auf- und Abbaus des Griffstückes ist deshalb verschleißarm, so daß eine lange Lebensdauer selbst dann gewährleistet ist, wenn dieser Auf- und Abbau sehr häufig erfolgt.

Die Hülse ist leicht in die Ausnehmung des Griffstückes einführbar, wenn sie der Durchbrechung gegenüberliegend auf ihrer ganzen Länge einen durchgehenden Längsschlitz aufweist und vorzugsweise leicht federnd ausgebildet ist. Dabei kann das Federstück gegenüber dem Querschnitt der Hülse ortsfest gemacht werden, wenn die Ausnehmung in ihrer der Durchbrechung gegenüberliegenden Seite ihrer Wandung mit einer Längsnut versehen ist, in welcher der Halteschenkel des Federstückes einlegbar und von den anliegenden, durch den Längsschlitz getrennten und den Halteschenkel mindestens teilweise überdeckenden Wandstücken in der Wand der Hülse quer zu der Längserstreckung des Griffstückes arretierbar ist. Aber auch in Richtung dieser Längserstreckung kann das Federstück lagegesichert werden, wenn es nämlich mit einer Abkantung zwischen dem Halteschenkel und dem Biegeschenkel und die Hülse in ihrer der Durchbrechung gegenüberliegenden Wand quer zu der Längserstreckung des Griffstückes mit Querschlitzen versehen ist und wenn zumindest die Abkantung in einem der Querschlitze so angeordnet ist, daß das Federstück in der Richtung der Längserstreckung des Griffstückes in der Hülse ortsfest arretiert ist. Eine weitere Lagesicherung kann dadurch erfolgen, daß das Federstück an seinem von dem Betätigungsstück entfernten Ende in ein aus dem flächigen Haltestück abragend aufgestellten Flachstück abgekantet ist und das Flachstück in einem weiteren der Querschlitze angeordnet ist, seinerseits das Federstück in der Richtung der Längserstreckung des Griffstückes in der Hülse ortsfest arretierend.

Das Federstück und die Hülse sind in einfacher Weise komplett durch Stanzen und Abkanten bzw. durch Strangpressen formbar, so daß eine hohe Fertigungs-Genauigkeit keine Schwierigkeit verursacht und auch der Zusammenbau der Teile mit dem Griffstück ohne Hilfsmittel und gesonderte Befestigungen erfolgen kann; spezielle Kenntnisse sind für diese Arbeiten nicht erforderlich.

Die gegebenenfalls komplett vormontierte Hülse ist in der Ausnehmung des Griffstückes in Längsrichtung bequem arretierbar, wenn sie im Bereich der Durchbrechung des Griffstückes ein aus der Hülse durch einen Einriß, eine Abkantung oder dergleichen Verformung hergestelltes, beim Einschieben der Hülse in die Ausnehmung zurückfederndes und danach widerhakenförmig in die Durchbrechung einfallendes Raststück aufweist und das Raststück in die Durchbrechung einfallen kann, wenn die Hülse an der Stirnseite der Ausnehmung anstößt. Die Hülse kann dann aus der Ausnehmung nicht mehr ohne weiteres entfernt werden; dazu müßte das Raststück mit einem geeigneten Werkzeug durch die (leere) Durchbrechung hindurch aus deren Bereich herausgedrückt werden; ansonsten ist ein sicherer Sitz in dem Griffstück gewährleistet, insbesondere, wenn die Hülse an der Stirnwand der Ausnehmung federnd und mit dem Raststück unter entsprechender Vorspannung an der Durchbrechung anliegt. Zu diesem Zweck kann die Hülse in einfacher Weise im Bereich der Stirnwand der Ausnehmung mindestens einen federnden Quersteg aufweisen, der sich an einem an der Stirnseite vorstehend ausgebildeten Lagersteg abstützt. Am einfachsten ist es, wenn der Quersteg durch einen Schlitz in der Hülse gebildet wird. Auf diese Weise ist auch die Hülse unter Vorspannung in der Ausnehmung montierbar, die von der Federung des Quersteges auf das in der Durchbrechung anliegende Raststück und die Wandung der Durchbrechung ausgeübt wird.

Es muß dafür gesorgt werden, daß das Betätigungsstück in der Ausnehmung gut geführt und unverlierbar angeordnet ist, wenn die erfindungsgemäße Griffbefestigung komplettiert ist.

Das kann zweckmäßig beispielsweise dadurch erfolgen, daß die Hülse im Bereich der Durchbrechung eine Öffnung für das Betätigungsstück aufweist, wenn sie in der Ausnehmung arretiert ist, daß das Betätigungsstück ferner eine sich quer zu seinem Hub erstreckende und zu dem Raststück hin gerichtete, dieses übergreifende, stirnseitige Führungsnut aufweist und eine erste Schulter der Führungsnut unter dem Einfluß des Federstückes auf das Betätigungsstück an einer Seite des Raststückes anliegt, während eine zweite Schulter der Führungsnut an dessen anderer Seite anliegt, wenn das Betätigungsstück bedient wird, dessen Hub begrenzend, wobei der Abstand der Schultern ohne Schwierigkeit so gewählt werden kann, daß durch den Hub des Betätigungsstückes die Entrastung der Rastelemente ermöglicht wird.

Die Führung des Betätigungsstückes läßt sich noch verbessern, wenn an diesem Betätigungsstück in Richtung seines Hubes sich erstreckende seitliche Führungsnuten vorgesehen sind, die zu ihnen parallele Abkantungen, Sicken oder dergleichen in den benachbarten Wänden der Hülse übergreifen und auf diesen leicht beweglich verschiebbar sind.

Die erfindungsgemäße Griffbefestigung wird komplettiert, wenn das Griffstück das Haltestück nur unvollständig überfängt und eine Distanzhülse zwischen dem Griffstück und dem Kochgefäß vorgesehen ist, welche den frei bleibenden Teil des Haltestückes verkleidet. Die Distanzhülse sorgt dabei gleichzeitig dafür, daß die Rastung des Griffstückes auf dem Haltestück nicht überschritten werden kann, sondern beide Teile eindeutig einander zugeordnet sind. Die Distanzhülse kann sowohl mit dem Griffstück als auch mit dem Haltestück verbunden sein; dementsprechend sind entweder an der Hülse Haltelaschen vorgesehen, an denen die Distanzhülse befestigt ist, oder diese ist stattdessen an dem Haltestück befestigt. Dabei kann die Distanzhülse ganz einfach reibschlüssig befestigt sein, insbesondere, wenn sie als geschlossenes Hohlprofil ausgebildet ist.

Das Griffstück und/oder das Betätigungsstück bestehen zweckmäßig aus einem Kunststoff mit Isoliercharakter oder aus Metall.

Das an dem Kochgefäß beispielsweise festgenietete oder angeschweißte, metallene Haltestück ist im Querschnitt am besten U-förmig ausgebildet, wobei an dem verbindenden Steg Haltenasen ausgebildet sind, die an einer Wand der Hülse anliegen und das Haltestück spielfrei arretieren, wenn die von dem Steg abgebogenen Gurte an der gegenüberliegenden, geschlitzten Wand der Hülse anliegen.

Durch die Erfindung wird die Aufgabe in überraschend einfacher Weise unter Beibehaltung der gattungsgemäß einfachen Bauweise einer solchen Griffbefestigung gelöst. Ein einziges zusätzliches und einfach ausgebildetes Bauteil, nämlich das Betätigungsstück, ist für die erfindungsgemäße Griffbefestigung erforderlich, wobei nach wie vor der Zusammenbau der Anordnung denkbar einfach ist. Die Bedienung, das heißt die Lösung des Griffstückes von dem Kochgefäß, ist dabei ebenfalls sehr einfach, leicht und schnell ausführbar und kann beliebig oft wiederholt werden, weil die Anordnung keinem merklichen Verschleiß unterliegt.

Die Erfindung wird nachstehend an Hand der Zeichnung an einem Ausführungsbeispiel näher erläutert. Es zeigen
- Fig. 1: eine erfindungsgemäße, an einem Kochgefäß verrastete Griffbefestigung,
- Fig. 2: ein von dem Kochgefäß gelöstes Griffstück einer entsprechend entrasteten Griffbefestigung,
- Fig. 3: eine Griffbefestigung entsprechend Fig. 1 während des Wiederverrastens des gelösten Griffstückes,
- Fig. 4: eine Teilansicht X aus Fig. 1,
- Fig. 5: eine Ansicht Y aus Fig. 2 und
- Fig. 6 und Fig. 7: jeweils einen um die Neigung des Handgriffes in Fig. 2 gedrehten Schnitt A - A und B - B,
sämtlich in schematisch vereinfachter Darstellung.

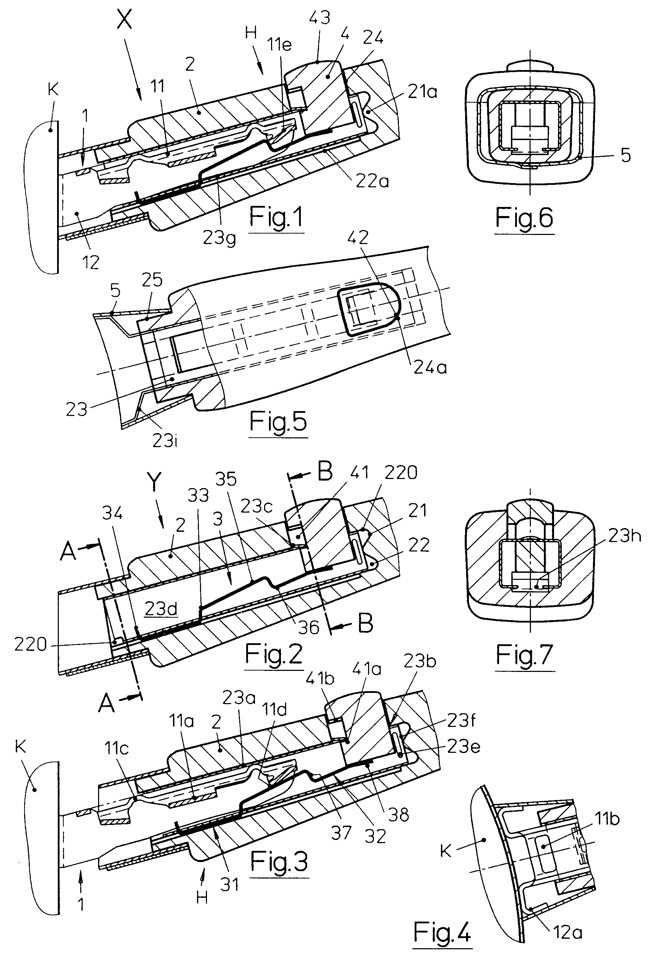

Eine erfindungsgemäße Griffbefestigung eines Handgriffes H an einem Kochgefäß K nach der Erfindung besteht zunächst entsprechend Fig. 1 bis 3 aus einem an dem Kochgefäß K unlöslich befestigten, zapfenartig von dem Kochgefäß K abstehenden Haltestück 1, einem das Haltestück 1 überfangendem Griffstück 2, das an dem Haltestück 1 mittels eines Federstückes 3 durch eine Rastung lösbar befestigt ist, und einem in dem Griffstück 2 bewegbar befindlichen Betätigungsstück 4, mit dessen Hilfe die Rastung des Griffstückes 2 an dem Haltestück 1 lösbar und das Griffstück 2 von dem Kochgefäß K entfernbar ist.

Das Haltestück 1 ist von einem im wesentlichen U-förmigen Querschnitt, dessen obenliegender Steg 11 mehrfach mit Einziehungen 11a versehen und durch Ausschnitte 11b (Fig. 4) unterbrochen ist. Eingeprägte Haltenasen 11c sorgen in Verbindung mit den aus dem Steg 11 abgekanteten Gurten 12 dafür, daß das Griffstück 2 in einer ersten Richtung spielfrei auf dem Haltestück 1 aufsitzt. Die Gurte 12 sind soweit voneinander beabstandet, daß in einer zweiten, zu der ersten senkrechten Richtung ebenfalls kein Spiel möglich ist. Die an dem freien Ende des Haltestückes 1 befindliche eingezogene Querschulter 11e bildet auch ein (zweites) Rastelement 11d zur Verrastung des Federstückes 3 aus. Das Haltestück 1 ist an dem Kochgefäß K mittels Punktschweißung oder Nieten befestigt; zu diesem Zweck sind die kochgefäßseitigen Enden seiner Gurte 12 mehrfach abgebogen, so daß sie Stützlaschen 12a ausbilden.

Das Griffstück 2 besteht aus einem Kunststoff und ist von einer zentralen, sich längs des Griffstückes 2 bis zu einer Stirnwand 21 erstreckenden Ausnehmung 22 ausgehöhlt, die fast das gesamte Haltestück 1 überfängt, wenn sich (Fig. 1) das Griffstück 2 in Betriebsbereitschaft befindet. Die Wandung 220 der im Querschnitt etwa rechteckigen und jedenfalls dem Querschnitt des Haltestückes 1 folgenden Ausnehmung 22 liegt dabei nicht direkt an dem Haltestück 1 an; vielmehr ist die Ausnehmung 22 von einer dünnwandigen, metallenen Hülse 23 ausgekleidet. Die Hülse 23 kontaktiert durchweg den Steg 11 und die Gurte 12 des Haltestückes 1 und ist dort auch vollflächig ausgebildet.

An dem Schaft des Griffstückes 2 ist eine Durchbrechung 24 von außen bis in die Ausnehmung 22 reichend so vorgesehen, daß dort das Betätigungsstück 4 in der Durchbrechung 24 zu der Ausnehmung 22 querbeweglich und so vorgesehen werden kann, daß es von dem Daumen der das Griffstück 2 erfassenden Hand zwanglos betätigbar ist. In Fig. 1 ist gut zu erkennen, daß bei verrastetem Griffstück 2 das Haltestück 1 bereits vor der Durchbrechung 24 endet. Die (in der Zeichnung) obere Wand 23a der Hülse 23 ist an dieser Stelle mit einer Öffnung 23b versehen, aus der ein Raststück 23c soweit abgefaltet ist, daß es beim Einschieben der Hülse 23 in die Ausnehmung 22 von der Wandung 220 abgefedert wird und die Hülse 23 in dem Griffstück 2 verrastet, wenn es in die Durchbrechung 24 einfällt.

Es können seitliche Führungsnuten vorgesehen sein, die über entsprechenden, in der Zeichnung nicht sichtbaren Abkantungen, Sicken oder dergleichen in den benachbarten Wänden 23d der Hülse 23 geführt sind, so daß das Betätigungsstück 4 in seiner Betätigungsrichtung eine mehrfache Führung erfährt.

In der Hülse 23 sind an ihrem der Stirnwand 21 in der Ausnehmung 22 benachbarten Ende in den Wänden 23d zu der Stirnwand 21 parallele Schlitze 23e eingestanzt, die jeweils einen Quersteg 23f belassen, der so bemessen ist, daß die Hülse 23 unter axialer Einfederung an einem Lagersteg 21a der Stirnwand 21 anschlagen kann. Die Anordnung ist so getroffen, daß eine solche Einfederung erfolgt, wenn das Raststück 23c in die Durchbrechung 24 einfällt. Auf diese Weise ist die Hülse 23 mit Vorspannung in der Ausnehmung 22 arretiert.

Das Raststück 23c dient außerdem in Verbindung mit einer an dem Betätigungsstück 4 stirnseitigen Führungsnut 41 zu dessen Hubbegrenzung und unverlierbaren Anordnung in dem Griffstück 2. In der Fig. 7 ist zu erkennen, daß die Führungsnut 41 etwa in der Breite des Raststückes 23c ausgeführt ist. Seine maximale Höhe wird durch eine erste Schulter 41a in der Führungsnut 41 so begrenzt, daß eine Rastung des Griffstückes 2 an dem Haltestück 1 erfolgen kann, während eine zweite Schulter 41b gerade deren Lösung ermöglicht. Eine der Führungsnut 41 abgewandte Rückfront 42 des Betätigungsstückes 4 ist als halber Kreiszylinder ausgeführt und damit an einer entsprechend geformten Rückwand 24a der Durchbrechung 24 leichtgängig geführt. Eine Bedienfläche 43 des Betätigungsstückes 4 ist zur bequemen Handhabung ballig ausgebildet.

Eine der Öffnung 23b gegenüberliegende (untere) Wand 23g der Hülse 23 ist (Fig. 6,7) von einem mittigen, durchgehenden Längsschlitz 23h geteilt, so daß die Hülse 23 in ihrer gesamten Längserstreckung mit leichter Vorspannung (und damit spielfrei) in der Ausnehmung 22 verankert werden kann, in der sich unter der Wand 23g eine flache Längsnut 22a befindet, die zur Aufnahme eines ruhenden Halteschenkels 31 des Federstückes 3 dient, an dem ein beweglicher Biegeschenkel 32 abgekantet ist. Die Längsnut 22a ist breiter als der Längsschlitz 23h und der Breite des Halteschenkels 31 angepaßt, so daß das Federstück 3 quer zu der Längsnut 22a unbeweglich ist. Die zugehörige, in dem sich insgesamt längserstreckenden Federstück 3 quergestellte, erste Abkantung 33 durchstößt die Wand 23g in einem passenden, in der Zeichnung nicht sichtbaren ersten Querschlitz, so daß das Federstück 3 auch in seiner Längsrichtung an dem Griffstück 2 ortsfest arretiert ist. Ein zweiter Querschlitz ist für ein an dem freien Ende des Halteschenkels 31 aufgestellten Flachstück 34 vorgesehen, das der weiteren Lagesicherung des Federstückes 3 dient.

An die Abkantung 33 schließt sich an dem Biegeschenkel 32 eine Ablaufschräge 35 an, die (Fig. 3) beim Aufschieben des Griffstückes 2 den Biegeschenkel 32 an der Querschulter 11e und um die Abkantung 33 vorspannend ausbiegt, bis ein auf die Ablaufschräge 35 folgendes (erstes), von einer weiteren Abkantung 36 ausgebildetes Rastelement 37 in das zweite Rastelement 11d einfällt und das Griffstück 2 damit an dem Haltestück 1 verrastet. Beide Abkantungen 33,36 sind Z-förmig; dabei geht die zweite Abkantung 36 in ein an dem Betätigungsstück 4 federnd anliegendes Endstück 38 über.

Zwischen dem Kochgefäß K und dem Griffstück 2 verbleibt ein Teil des Haltestückes 1, das von dem Griffstück 2 nicht überfangen wird. Es wird von einer rohrförmigen, aus einem (Fig. 6) überlappten Blech hergestellten Distanzhülse 5 abgedeckt. Die Distanzhülse 5 kann sowohl an dem Haltestück 1 als auch an dem Griffstück 2 befestigt sein; es ist aber auch möglich, daß sie an einem der beiden Bauelemente 1,2 durch einen bloßen Reibschluß befestigt ist, damit sie beim Lösen des Griffstückes 2 nicht verloren geht. So kann sie beispielsweise leicht federnd auf einen an dem Griffstück 2 eingezogenen Haltebund 25 aufgeschoben sein, wie es in der Ausführung der Zeichnung (Fig. 1, 2, 6) erfolgt. Es ist aber stattdessen auch möglich, die Distanzhülse 5 an Haltelaschen 23i der Hülse 23 zu befestigen (Fig. 5) oder an den Stützlaschen 12a anzubringen, mit denen das Haltestück 1 an dem Kochgefäß K befestigt ist (Fig. 4).

### Aufstellung der Bezugszeichen

- 1: Haltestück
- 11: Steg
- 11a: Einziehung
- 11b: Ausschnitt
- 11c: Haltenase
- 11d: (zweites) Rastelement
- 11e: Querschulter
- 12: Gurt
- 12a: Stützlasche
- 2: Griffstück
- 21: Stirnwand
- 21a: Lagersteg
- 22: Ausnehmung
- 220: Wandung
- 22a: Längsnut
- 23: Hülse
- 23a: (obere) Wand
- 23b: Öffnung
- 23c: Raststück
- 23d: (seitliche) Wand
- 23e: Schlitz
- 23f: Quersteg
- 23g: (untere) Wand
- 23h: Längsschlitz
- 23i: Haltelasche
- 24: Durchbrechung
- 24a: Rückwand
- 25: Haltebund
- 3: Federstück
- 31: Halteschenkel
- 32: Biegeschenkel
- 33: (erste) Abkantung
- 34: Flachstück
- 35: Ablaufschräge
- 36: (weitere) Abkantung
- 37: (erstes) Rastelement
- 38: Endstück
- 4: Betätigungsstück
- 41: Führungsnut
- 41a: (erste) Schulter
- 41b: (zweite) Schulter
- 42: Rückfront
- 43: Bedienfläche
- 5: Distanzhülse
- H: Handgriff
- K: Kochgefäß

## Patentansprüche

1. Griffbefestigung für einen Handgriff (H) zur Verrastung eines Griffstückes (2) in seiner Gebrauchslage an einem Kochgefäß (K) oder dergleichen, mit einem an dem Kochgefäß (K) vorgesehenen und zapfenförmig abstehenden, von dem Griff-stück (2) mit einer Ausnehmung (22) überfangenen, metallenen Haltestück (1) und mit einem in der Ausnehmung (22) befestigten, sich längs dieser erstreckenden und mit dem Haltestück (1) koppelbaren Federstück (3), wobei das Federstück (3) an dem Haltestück (1) selbsttätig und formschlüssig rastbar ist, wenn das Griffstück (2) über das Haltestück (1) geschoben wird und in seiner Gebrauchslage anschlägt,
dadurch gekennzeichnet, daß
in dem Griffstück (2) quer zu seiner Längserstreckung eine in der Ausnehmung (22) endende Durchbrechung (24) vorgesehen ist, in der, an dem Griffstück (2) unverlierbar ein Betätigungsstück (4) beweglich in Richtung auf die Ausnehmung (22) gelagert ist, mit dem das Federstück (3) belastbar und dabei von dem Haltestück (1), den Formschluß aufhebend, entrastbar ist, daß die Ausnehmung (22) des Griffstückes (2) in ihrer Längserstreckung zumindest teilweise von einer metallenen, rohrförmigen und in der Ausnehmung (22) ortsfest arretierten Hülse (23) ausgekleidet ist, die zur Festlegung eines Endes des Federstückes (3) dient.

2. Griffbefestigung nach Anspruch 1, dadurch gekennzeichnet, daß das Federstück (3) aus einem Halteschenkel (31) und einem Biegeschenkel (32) besteht, mit seinem Halteschenkel (31) der Durchbrechung (24) gegenüberliegend ortsfest gehaltert ist und der Biegeschenkel (32) als einarmiger Hebel ausgeführt ist mit einem ersten Rastelement (37), das beim Zusammenwirken mit einem an dem Haltestück (1) ausgebildeten zweiten Rastelement (11d) die Verrastung herstellt.

3. Griffbefestigung nach Anspruch 1 und 2, dadurch gekennzeichnet, daß sich an dem Biegeschenkel (32) eine Ablaufschräge (35) befindet, die beim Aufschieben des Griffstückes (2) mit einer Querschulter (11e) des Haltestückes (1) kontaktiert und dabei den Biegeschenkel (32) gegen die dabei steigende Federkraft zunehmend aus seiner Ruhelage ausschwenkt, bis sein Rastelement (37) unter dem Einfluß der Federkraft in das Rastelement (11d) an dem Haltestück (1) einfällt.

4. Griffbefestigung nach einem der Ansprüche 2 oder 3, dadurch gekennzeichnet, daß mittels des Betätigungsstückes (4) der Biegeschenkel (32) an seinem freien Endstück (38) belastbar ist.

5. Griffbefestigung nach einem der Ansprüche 1 bis 4, dadurch gekennzeichnet, daß die Ausnehmung (22) einen im wesentlichen rechteckigen Querschnitt aufweist.

6. Griffbefestigung nach einem der Ansprüche 1 bis 5, dadurch gekennzeichnet, daß die Hülse (23) der Durchbrechung (24) gegenüberliegend auf ihrer ganzen Länge einen durchgehenden Längsschlitz (23h) aufweist und vorzugsweise leicht federnd ausgebildet ist.

7. Griffbefestigung nach einem der Ansprüche 5 oder 6, dadurch gekennzeichnet, daß die Ausnehmung (22) in ihrer der Durchbrechung (24) gegenüberliegenden Seite ihrer Wandung (220) mit einer Längsnut (22a) versehen ist, in welcher der Halteschenkel (31) des Federstückes (3) einlegbar und von den anliegenden, durch den Längsschlitz (23h) getrennten und den Halteschenkel (31) mindestens teilweise überdeckenden Wandstücken in der Wand (23g) der Hülse (23) quer zu der Längserstreckung des Griffstückes (2) arretierbar ist.

8. Griffbefestigung nach einem der Ansprüche 5 bis 7, dadurch gekennzeichnet, daß das Federstück (3) mit einer Abkantung (33) zwischen dem Halteschenkel (31) und dem Biegeschenkel (32) und die Hülse (23) in ihrer der Durchbrechung (24) gegenüberliegenden Wand (23g) quer zu der Längserstreckung des Griffstückes (2) mit Querschlitzen versehen ist und daß zumindest die Abkantung (33) in einem der Querschlitze so angeordnet ist, daß das Federstück (3) in der Richtung der Längserstreckung des Griffstückes (2) in der Hülse (23) ortsfest arretiert ist.

9. Griffbefestigung nach Anspruch 8, dadurch gekennzeichnet, daß das Federstück (3) an seinem von dem Betätigungsstück (4) entfernten Ende in ein aus dem flächigen Haltestück (1) abragend aufgestellten Flachstück (34) abgekantet ist und das Flachstück (34) in einem weiteren der Querschlitze angeordnet ist, seinerseits das Federstück (3) in der Richtung der Längserstreckung des Griffstückes (2) in der Hülse (23) ortsfest arretierend.

10. Griffbefestigung nach einem der Ansprüche 1 bis 9, dadurch gekennzeichnet, daß die Hülse (23) im Bereich der Durchbrechung (24) des Griffstückes (2) ein aus der Hülse (23) durch einen Einschnitt, eine Abkantung oder dergleichen Verformung hergestelltes, beim Einschieben der Hülse (23) in die Ausnehmung (22) zurückfederndes und danach widerhakenförmig in die Durchbrechung (24) einfallendes Raststück (23c) aufweist und das Raststück (23c) in die Durchbrechung (24) einfallen kann, wenn die Hülse (23) an der Stirnwand (21) der Ausnehmung (22) anstößt.

11. Griffbefestigung nach Anspruch 10, dadurch gekennzeichnet, daß die Hülse (23) im Bereich der Durchbrechung (24) eine Öffnung (23b) für das Betätigungsstück (4) aufweist, wenn sie in der Ausnehmung (22) arretiert ist, daß das Betätigungsstück (4) eine sich quer zu seinem Hub erstreckende und zu dem Raststück (23c) hin gerichtete, dieses übergreifende, stirnseitige Führungsnut (41) aufweist und eine erste Schulter (41a) der Führungsnut (41) unter dem Einfluß des Federstückes (3) auf das Betätigungsstück (4) an einer Seite des Raststückes (23c) anliegt, während eine zweite Schulter (41b) der Führungsnut (41) an dessen anderer Seite anliegt, wenn das Betätigungsstück (4) bedient wird, dessen Hub begrenzend.

12. Griffbefestigung nach Anspruch 11, dadurch gekennzeichnet, daß der Abstand der Schultern (41a,b) so gewählt wird, daß durch den Hub des Betätigungsstückes (4) die Entrastung der Rastelemente (11d;37) ermöglicht wird.

13. Griffbefestigung nach einem der Ansprüche 1 bis 12, dadurch gekennzeichnet, daß an dem Betätigungsstück (4) in Richtung seines Hubes sich erstreckende seitliche Führungsnuten vorgesehen sind, die zu ihnen parallele Abkantungen, Sicken oder dergleichen in den benachbarten Wänden (23d) der Hülse (23) übergreifen und auf diesen leicht beweglich verschiebbar sind.

14. Griffbefestigung nach einem der Ansprüche 10 bis 13, dadurch gekennzeichnet, daß die Hülse (23) an der Stirnwand (21) der Ausnehmung (22) federnd und mit dem Raststück (23c) unter entsprechender Vorspannung an der Durchbrechung (24) anliegt.

15. Griffbefestigung nach Anspruch 14, dadurch gekennzeichnet, daß die Hülse (23) im Bereich der Stirnwand (21) der Ausnehmung (22) mindestens einen federnden Quersteg (23f) aufweist, der sich an einem an der Stirnwand (21) vorstehend ausgebildeten Lagersteg (21a) abstützt.

16. Griffbefestigung nach Anspruch 15, dadurch gekennzeichnet, daß der Quersteg (23f) durch einen Schlitz (23e) in der Hülse (23) gebildet wird.

17. Griffbefestigung nach einem der Ansprüche 1 bis 16, dadurch gekennzeichnet, daß das Griffstück (2) das Haltestück (1) nur unvollständig überfängt und eine Distanzhülse (5) zwischen dem Griffstück (2) und dem Kochgefäß (K) vorgesehen ist, welche den frei bleibenden Teil des Haltestückes (1) verkleidet.

18. Griffbefestigung nach einem der Ansprüche 1 bis 17, dadurch gekennzeichnet, daß an der Hülse (23) Haltelaschen (23i) vorgesehen sind, an denen die Distanzhülse (5) befestigt ist.

19. Griffbefestigung nach einem der Ansprüche 1 bis 17, dadurch gekennzeichnet, daß die Distanzhülse (5) an dem Haltestück (1) befestigt ist.

20. Griffbefestigung nach einem der Ansprüche 1 bis 19, dadurch gekennzeichnet, daß die Distanzhülse (5) reibschlüssig befestigt ist.

21. Griffbefestigung nach einem der Ansprüche 1 bis 20, dadurch gekennzeichnet, daß die Distanzhülse (5) als geschlossenes Hohlprofil ausgebildet ist.

22. Griffbefestigung nach einein der Ansprüche 1 bis 21, dadurch gekennzeichnet, daß das Griffstück (2) und/oder das Betätigungsstück (4) aus einem Kunststoff oder Metall bestehen.

23. Griffbefestigung nach einem der Ansprüche 1 bis 22, dadurch gekennzeichnet, daß das Haltestück (1) im Querschnitt U-förmig ausgebildet ist, wobei an dem verbindenden Steg (11) Haltenasen (11c) ausgebildet sind, die an einer Wand (23a) der Hülse (23) anliegen und das Haltestück (1) spielfrei arretieren, wenn die von dem Steg (11) abgebogenen Gurte (12) an der gegenüberliegenden, geschlitzten Wand (23g) der Hülse (23) anliegen.

## Claims

1. A handle anchorage for a handle (H) to lock a handle piece (2) in its operational position on a cooking vessel (K) or the like, having a metal supporting piece (1) which is provided on the cooking vessel (K) so as to project peg-like therefrom and is covered by the handle piece (2) by means of a recess (22), and having a spring member (3) which is secured in the recess (22), extends therealong and can be coupled to the supporting piece (1), the spring member (3) being automatically lockable with the supporting piece (1) in a positive-locking manner when the handle piece (2) is pushed over the supporting piece (1) and comes to rest in its operational position, characterised in that an opening (24) leading into the recess (22) is provided in the handle piece (2) and extends transversely to the longitudinal extension thereof, an actuating piece (4) being undetachably mounted on the handle piece (2) in this opening (24) in a manner so as to be movable in the direction of the recess (22), the spring member (3) being loadable by means of this actuating piece (4) and thereby being disengageable - releasing the positive connection - from the supporting piece (1), in that the longitudinal extension of the recess (22) of the handle piece (2) is at least partially lined by a metal, tubular sleeve (23) which is fixedly locked in the recess (22) and serves to make fast one end of the spring member (3).

2. A handle anchorage in accordance with Claim 1, characterised in that the spring member (3) is composed of a holding leg (31) and a bending leg (32), is fixedly secured opposite the opening (24) by means of its holding leg (31), and the bending leg (32) is in the form of a one-armed lever with a first locking member (37) which produces the lock upon co-operation with a second locking element (11d) formed on the supporting piece (1).

3. A handle anchorage in accordance with Claim 1 and 2, characterised in that a back taper incline (35) is located on the bending leg (32) and contacts with a transverse shoulder (11e) of the supporting piece (1) when the handle piece (2) is being pushed on and thereby increasingly swings the bending leg (32) from its rest position against the mounting spring force until its locking element (37) engages into the locking element (11d) on the supporting piece (1) under the influence of the spring force.

4. A handle anchorage in accordance with either one of Claims 2 or 3, characterised in that the free end-piece (38) of the bending leg (32) is loadable by means of the actuating piece (4).

5. A handle anchorage in accordance with any one of Claims 1 to 4, characterised in that the recess (22) has a substantially rectangular cross-section.

6. A handle anchorage in accordance with any one of Claims 1 to 5, characterised in that the sleeve (23) has - opposite the opening (24) - a through longitudinal slit (23h) over its entire length and is preferably slightly resilient.

7. A handle anchorage in accordance with either one of Claims 5 or 6, characterised in that the recess (22) is provided with a longitudinal groove (22a) in that side of its wall (220) which faces the opening (24), the holding leg (31) of the spring member (3) being insertable into this longitudinal groove (22a) and being lockable transversely to the longitudinal extension of the handle piece (2) by the adjacent wall pieces of the wall (23g) of the sleeve (23) which are separated by the longitudinal slit (23h) and at least partially cover the holding leg (31).

8. A handle anchorage in accordance with any one of Claims 5 to 7, characterised in that the spring member (3) is provided with a bend (33) between the holding leg (31) and the bending leg (32), and the sleeve (23) is provided with transverse slits - extending transversely to the longitudinal extension of the handle piece (2) - in its wall (23g) facing the opening (24), and in that at least the bend (33) is arranged in one of the transverse slits in such a manner that the spring member (3) is fixedly locked in the sleeve (23) in the direction of the longitudinal extension of the handle piece (2).

9. A handle anchorage in accordance with Claim 8, characterised in that the end of the spring member (3) remote from the actuating piece (4) is bent into a flat piece (34) projecting away from the planar supporting piece (1), and the flat piece (34) is arranged in another of the transverse slits and fixedly locks the spring member (3) in the sleeve (23) in the direction of the longitudinal extension of the handle piece (2).

10. A handle anchorage in accordance with any one of Claims 1 to 9, characterised in that in the region of the opening (24) of the handle piece (2), the sleeve (23) has a locking piece (23c) which is formed therefrom by a cut, a bend or a deformation of this kind and springs back when the sleeve (23) is pushed into the recess (22) and then engages barb-like into the opening (24), and the locking piece (23c) can engage into the opening (24) when the sleeve (23) makes contact with the end wall (21) of the recess (22).

11. A handle anchorage in accordance with Claim 10, characterised in that in the region of the opening (24), the sleeve (23) has an opening (23b) which is for the actuating piece (4) when the sleeve (23) is locked in the recess (22), in that the actuating piece (4) has a front guide groove (41) which extends transversely to its direction of travel, is directed towards the locking piece (23c) and engages thereover, and a first shoulder (41a) of the guide groove (41) contacts with one side of the locking piece (23c) under the influence of the spring member (3) on the actuating piece (4), while a second shoulder (41b) of the guide groove (41) contacts with its other side when the actuating piece (4) is operated, this limiting the travel of the latter.

12. A handle anchorage in accordance with Claim 11, characterised in that the distance between the shoulders (41a, b) is selected in such a manner that unlocking of the locking members (11d; 37) is made possible by the actuating piece travel.

13. A handle anchorage in accordance with any one of Claims 1 to 12, characterised in that lateral guide grooves extending in the direction of travel of the actuating piece (4) are provided on the latter, engage over bends, beads or the like - which are parallel to these guide grooves and are arranged in the adjacent walls (23d) of the sleeve (23) - and are slidable thereon with easy movability.

14. A handle anchorage in accordance with any one of Claims 10 to 13, characterised in that the sleeve (23) resiliently contacts with the end wall (21) of the recess (22) and, by means of the locking piece (23c), contacts with the opening (24) with corresponding pretensioning.

15. A handle anchorage in accordance with Claim 14, characterised in that in the region of the end wall (21) of the recess (22), the sleeve (23) has at least one resilient crosspiece (23f) supported on a bearing crosspiece (21a) projecting from the end wall (21).

16. A handle anchorage in accordance with Claim 15, characterised in that the crosspiece (23f) is formed by a slit (23e) in the sleeve (23).

17. A handle anchorage in accordance with any one of Claims 1 to 16, characterised in that the handle piece (2) does not completely cover the supporting piece (1), and a spacer sleeve (5) is provided between the handle piece (2) and the cooking vessel (K) and encases the part of the supporting piece (1) remaining free.

18. A handle anchorage in accordance with any one of Claims 1 to 17, characterised in that holding lugs (23i) are provided on the sleeve (23), the spacer sleeve (5) being secured thereto.

19. A handle anchorage in accordance with any one of Claims 1 to 17, characterised in that the spacer sleeve (5) is secured to the supporting piece (1).

20. A handle anchorage in accordance with any one of Claims 1 to 19, characterised in that the spacer sleeve (5) is secured in a friction-locking manner.

21. A handle anchorage in accordance with any one of Claims 1 to 20, characterised in that the spacer sleeve (5) is in the form of a closed hollow section.

22. A handle anchorage in accordance with any one of Claims 1 to 21, characterised in that the handle piece (2) and/or the actuating piece (4) are composed of a plastics material or metal.

23. A handle anchorage in accordance with any one of Claims 1 to 22, characterised in that the supporting piece (1) has a U-shaped cross-section, holding projections (11c) being formed on the connecting crosspiece (11)which contact with a wall (23a) of the sleeve (23) and lock the supporting piece (1) without play when the flanges (12) bent from the crosspiece (11) contact with the opposite, slit wall (23g) of the sleeve (23).

## Revendications

1. Fixation de poignée pour une poignée (H), pour l'encliquetage d'un organe de préhension (2) dans sa position d'utilisation sur un récipient de cuisson (K) ou analogue, comportant une pièce métallique de retenue (1) prévue sur le récipient de cuisson (K) et faisant saillie en forme d'embout, cette pièce étant entourée par l'organe de préhension (2) pourvu d'un évidement (22), et un élément de ressort (3) fixé dans l'évidement (22) et s'étendant le long de ce dernier pour pouvoir être couplé à la pièce de retenue (1), l'élément de ressort (3) pouvant être encliqueté automatiquement selon une liaison par formes complémentaires sur la pièce de retenue (1), lorsque l'organe de préhension (2) est engagé sur la pièce de retenue (1) et vient en butée dans sa position d'utilisation,
caractérisée en ce que
dans l'organe de préhension (2) est prévu, transversalement par rapport à l'étendue longitudinale de cet organe de préhension, un perçage (24) qui se termine dans l'évidement (22) et dans lequel est monté, d'une manière imperdable sur l'organe de préhension (2) avec possibilité de déplacement en direction de l'évidement (22), un organe d'actionnement (4) au moyen duquel l'élément de ressort (3) peut être chargé et peut être désencliqueté de la pièce de retenue (1), par suppression de la liaison par formes complémentaires, en ce que l'évidement (22) de l'organe de préhension (2) est habillé au moins partiellement sur son étendue longitudinale par une douille métallique tubulaire (23), retenue de façon fixe dans l'évidement (22) et servant à fixer une extrémité de l'élément de ressort (3).

2. Fixation de poignée selon la revendication 1 caractérisée en ce que l'élément de ressort (3) est constitué par une branche de retenue (31) et une branche flexible (32), et retenu de façon fixe en vis-à-vis du perçage (24) par sa branche de retenue (31) et en ce que la branche flexible (32) est agencée sous la forme d'un levier à un seul bras comportant un premier élément d'encliquetage (37) qui établit le verrouillage en coopérant avec un second élément d'encliquetage (11d) formé sur la pièce de retenue (1).

3. Fixation de poignée selon les revendications 1 et 2, caractérisée en ce que sur la branche flexible (32) est disposée une partie oblique de dégagement (35) qui, lors de l'emmanchement de l'organe de préhension (2), vient en contact avec un épaulement transversal (11e) de la pièce de retenue (1) et écarte de plus en plus par basculement, à partir de sa position de repos, la branche flexible (32) à l'encontre de la force croissante du ressort jusqu'à ce que son élément d'encliquetage (37) s'engage, sous l'influence de la force du ressort, dans l'élément d'encliquetage (11d) prévu sur la pièce de retenue (1).

4. Fixation de poignée selon l'une des revendications 2 ou 3, caractérisée en ce que la branche flexible (32) peut être chargée, au niveau de sa partie d'extrémité libre (38), au moyen de l'organe d'actionnement (4).

5. Fixation de poignée selon l'une des revendications 1 à 4, caractérisée en ce que l'évidement (22) présente une section transversale essentiellement rectangulaire.

6. Fixation de poignée selon l'une des revendications 1 à 5, caractérisée en ce que la douille (23) présente, en vis-à-vis du perçage (24), et ce sur toute sa longueur, une fente longitudinale continue et est de préférence légèrement élastique.

7. Fixation de poignée selon l'une des revendications 5 ou 6, caractérisée en ce que l'évidement (22) comporte, sur le côté de sa paroi (220), situé à l'opposé du perçage (24), une rainure longitudinale (22a), dans laquelle la branche de retenue (31) de l'élément de ressort (3) peut être inséré et peut être bloqué par les éléments de paroi appliqués qui sont séparés par la fente longitudinale (23h) et recouvrent au moins partiellement la branche de retenue (31), dans la paroi (23g) de la douille (23) transversalement par rapport à l'étendue longitudinale de l'organe de préhension (2).

8. Fixation de poignée selon l'une des revendications 5 à 7, caractérisée en ce que l'élément de ressort (3) comporte une partie coudée (33) entre la branche de retenue (31) et la branche flexible (32), et la douille (23) comporte des fentes transversales ménagées dans sa paroi (23g) qui est située à l'opposé du perçage (24), transversalement par rapport à l'étendue longitudinale de l'organe de préhension (2) et en ce qu'au moins la partie coudée (33) est disposée dans l'une des fentes transversales de telle sorte que l'élément de ressort (3) est retenu de façon fixe dans la direction de l'étendue longitudinale de l'organe de préhension (2) dans la douille (23).

9. Fixation de poignée selon la revendication 8, caractérisée en ce que l'élément de ressort (3) est coudé, au niveau de son extrémité éloignée de l'organe de fixation (4), avec un élément plat (34) redressé de manière à faire saillie à partir de la pièce de retenue plate (1) et que l'élément plat (34) est disposé dans une autre des fentes transversales, en bloquant pour sa part l'élément de ressort (3) de façon fixe dans la douille (23) dans la direction de l'étendue longitudinale de l'organe de préhension (2).

10. Fixation de poignée selon l'une des revendications 1 à 9, caractérisée en ce que la douille (23) présente, dans la zone du perçage (24) de l'organe de préhension (2), un élément d'encliquetage (23c), formé à partir de la douille (23) au moyen d'une entaille, d'un coudage ou d'une déformation similaire et repoussé élastiquement dans l'évidement (22) lors de l'insertion de la douille (23) pour s'engager ensuite, à la manière d'un crochet, dans le perçage (24), et en ce que l'élément d'encliquetage (23c) peut pénétrer dans le perçage (24) lorsque la douille (23) s'applique contre la paroi frontale (21) de l'évidement (22).

11. Fixation de poignée selon la revendication 10, caractérisée en ce que la douille (23) présente, dans la zone du perçage (24), une ouverture (23b) pour l'organe d'actionnement (4), lorsqu'elle est bloquée dans l'évidement (22) en ce que l'organe d'actionnement (4) présente une rainure de guidage frontale (41) s'étendant transversalement par rapport à la course de déplacement de l'organe d'actionnement et dirigée en direction de l'organe d'encliquetage (23c) pour s'engager par-dessus ce dernier, et en ce qu'un premier épaulement (41a) de la rainure de guidage (41) s'applique, sous l'influence de l'élément de ressort (3) sur l'organe d'actionnement (4), contre un côté de l'élément d'encliquetage (23c), tandis qu'un second épaulement (41b) de la rainure de guidage (41) s'applique contre l'autre côté de l'élément d'encliquetage, lorsque l'organe d'actionnement (4) est utilisé, en limitant la course de ce dernier.

12. Fixation de poignée selon la revendication 11, caractérisée en ce que la distance entre les épaulements (41a,b) est choisie de telle sorte que le désencliquetage des éléments d'encliquetage (11d;37) est rendu possible grâce à la course de déplacement de l'organe d'actionnement (4).

13. Fixation de poignée selon l'une des revendications 1 à 12, caractérisée en ce que sur l'organe d'actionnement (4) sont prévues des rainures latérales de guidage qui s'étendent dans la direction de la course de déplacement de l'organe d'actionnement, et s'adaptent sur des parties coudées, moulures ou analogues parallèles à ces rainures et formées dans les parois voisines (23d) de la douille (23), ces rainures pouvant coulisser facilement sur ces éléments.

14. Fixation de poignée selon l'une des revendications 10 à 13, caractérisée en ce que la douille (23) s'applique d'une part élastiquement contre la paroi frontale (21) de l'évidement (22) et d'autre part, au moyen de l'élément d'encliquetage (23c), moyennant une précontrainte correspondante, contre le perçage (24).

15. Fixation de poignée selon la revendication 14, caractérisée en ce que la douille (23) comporte, dans la zone de la paroi avant (21) de l'évidement (22), au moins une barrette transversale élastique (23f) prenant appui sur une barrette de support (21a) agencée de manière à faire saillie sur la paroi avant (21).

16. Fixation de poignée selon la revendication 15, caractérisée en ce que la barrette transversale (23f) est formée par une fente (23e) ménagée dans la douille (23).

17. Fixation de poignée selon l'une des revendications 1 à 16, caractérisée en ce que l'organe de préhension (2) entoure seulement d'une manière incomplète la pièce de retenue (1) et qu'entre l'organe de préhension (2) et le récipient de cuisson (K) est prévue une douille-entretoise (5), habillant la partie restée libre, de la pièce de retenue (1).

18. Fixation de poignée selon l'une des revendications 1 à 17, caractérisée en ce que sur la douille (23) sont prévus des éléments de retenue (23i), sur lesquels est fixée la douille-entretoise (5).

19. Fixation de poignée selon l'une des revendications 1 à 17, caractérisée en ce que la douille entretoise (5) est fixée sur la pièce de retenue (1).

20. Fixation de poignée selon l'une des revendications 1 à 19, caractérisée en ce que la douille-entretoise (5) est fixée selon une liaison par frottement.

21. Fixation de poignée selon l'une des revendications 1 à 20, caractérisée en ce que la douille-entretoise (5) se présente sous la forme d'un profilé creux fermé.

22. Fixation de poignée selon l'une des revendications 1 à 21, caractérisée en ce que l'organe de préhension (2) et/ou l'organe d'actionnement (4) sont réalisés en une matière plastique ou en un métal.

23. Fixation de poignée selon l'une des revendications 1 à 22, caractérisée en ce que l'élément de retenue (1) présente une section transversale en forme de U, et sur la barrette de liaison (11) sont formés des becs de retenue (11c) s'appliquant contre une paroi (23a) de la douille (23) et bloquant sans jeu la pièce de retenue (1) lorsque les pattes (12) coudées par la barrette (11) s'appliquent contre la paroi opposée fendue (23g) de la douille (23).
